# FASCICULE DE BREVET EUROPEEN

(11) **EP 1 290 884 B1**
(45) Date de publication et mention de la délivrance du brevet: **02.02.2005**
(21) Numéro de dépôt: 01934263.3
(22) Date de dépôt: 11.06.2001
(51) Int. Cl.: H04N 7/16, H04N 7/167

(54) **METHODE ET DISPOSITIF DE MISE A JOUR DES DROITS DE RECEPTION DANS UN SYSTEME DE RECEPTION MULTI-OPERATEURS**
METHODE UND GERÄT ZUR EMPFANGSRECHTAKTUALISIERUNG IN EINEM MULTI-OPERATOR EMPFANGSSYSTEM
METHOD AND DEVICE FOR UPDATING RECEPTION RIGHTS IN A MULTIPLE OPERATOR SYSTEM

(30) Priorité: 13.06.2000 CH 115900
(43) Date de publication de la demande: 12.03.2003
(73) Titulaire: Nagravision S.A., 1033 Cheseaux-sur-Lausanne (CH)
(72) Inventeur: SASSELLI, Marco, CH-1803 Chardonne (CH); BUSSY, Jean-Luc, CH-1033 Cheseaux-sur Lausanne (CH); STRANSKY, Philippe, CH-1261 Marchissy (CH)
(74) Mandataire: Wenger, Joel-Théophile
(86) Numéro de dépôt international: PCT/IB2001/001014
(87) Numéro de publication internationale: WO 2001/097518

(56) Documents cités:
- WO-A-98/43426
- US-A- 5 440 632
- SCHOONEVELD VAN D: "STANDARDIZATION OF CONDITIONAL ACCESS SYSTEMS FOR DIGITAL PAY TELEVISION" PHILIPS JOURNAL OF RESEARCH,NL,ELSEVIER, AMSTERDAM, vol. 50, no. 1/02, 1 juillet 1996 (1996-07-01), pages 217-225, XP000627672 ISSN: 0165-5817

## Description

La présente invention concerne le domaine de la télévision à péage.

Il est connu des systèmes distribués où un opérateur diffuse, à destination d'un ensemble d'abonnés, un ou plusieurs services dits de PayTV ou de télévision à péage. Ces services peuvent être encryptés ou en clair, et sont reçus et éventuellement décryptés au moyen d'un décodeur ou IRD (abréviation de l'anglais Integrated Receiver Decoder) installé chez l'utilisateur abonné au service ou aux services en question.

Dans ces systèmes connus, il arrive que le décodeur présent chez l'abonné commute automatiquement vers un mode de fonctionnement dit de stand-by ou de veille, dans le but d'économie de courant en accord avec des normes visant aux économies d'énergie telles que EPA 2000, définissant la consommation maximum d'un appareil électrique en état de veille. Il arrive également que l'abonné éteigne volontairement son décodeur, fréquemment dans le même but.

La tendance actuelle est de multiplier les offres de services proposées à l'abonné, ces services empruntant les mêmes supports physiques, notamment le satellite. Les transports empruntant ces supports physiques sont basés sur le choix d'une fréquence particulière associée au transport. Sur cette fréquence particulière associée au transport, on peut dans la technologie numérique de la télévision à péage loger plusieurs services du même opérateur.

Dans le but d'augmenter l'offre des services proposés à l'abonné, certains fabricants de décodeurs proposent des méthodes de scanning (on entend par scanning des moyens d'analyse du flux vidéo entrant dans le matériel de l'abonné) permettant à l'abonné de sélectionner l'ensemble des émissions diffusées en clair, c'est-à-dire non payantes, en plus de toute chaîne payante ou service payant. Cette sélection par scanning permet à l'abonné de visualiser les services autres que ie service dit préférentiel. Ces services autres que le service préférentiel font partie du même espace de réception, par exemple passent par le même satellite. En conséquence, les transports empruntant ces supports physiques peuvent être associés à des opérateurs différents. Certains de ces opérateurs peuvent diffuser des émissions de télévision non payantes, d'autres des bouquets payants avec un certain type, dit préférentiel, de contrôle d'accès, d'autres encore utilisant un contrôle d'accès différent du contrôle d'accès préférentiel. Dans ce contexte, chaque opérateur a un ou plusieurs transports ou fréquences qui lui est ou sont réservés.

Cette situation présente certains inconvénients. D'une part, lorsque l'abonné est en train de recevoir des programmes d'un opérateur non préférentiel (c'est-à-dire de n'utiliser que des transports ou fréquences correspondants), et choisit rarement de recevoir les services de cet opérateur préférentiel, le décodeur ou IRD cesse de recevoir des messages d'administration et de mise à jour, couramment appelés EMM dans la profession, qui sont diffusés avec le flux vidéo et sont normalement interprétés par le décodeur. D'autre part, cet inconvénient survient également lorsque le décodeur est éteint: en effet, un décodeur éteint par l'abonné cesse de recevoir les messages diffusés avec le flux vidéo.

Ces messages EMM sont importants pour le fonctionnement du système distribué prédécrit. La conséquence est que l'abonné ne recevra pas les mises à jour de ses droits, ainsi que les mises à jour logicielles liées, dans la plupart des cas, à un module de sécurité compatible avec le décodeur qui se présente généralement sous la forme d'une carte à puce.

Lorsque l'abonné a sélectionné un service soumis à un abonnement, les EMM en question sont envoyés au décodeur de manière cyclique, chaque cycle ayant une durée de l'ordre de plusieurs minutes. Cette durée dépend de la bande passante accordée aux EMM et du nombre d'EMM à diffuser, mais elle ne dépasse en général pas une heure. Si le décodeur est débranché, ou inopérant, ou en état de veille pendant un laps de temps très long, par exemple si l'abonné s'absente de chez lui pendant plusieurs semaines, cet abonné ne s'étonne en général pas d'avoir des droits dégradés, surtout s'il a omis de payer une facture pendant ce laps de temps. Par contre, si l'abonné utilise son décodeur pour regarder des chaînes d'un opérateur non préférentiel, par exemple des chaînes gratuites, pendant plusieurs heures ou même plusieurs jours, il n'est pas acceptable pour lui de se retrouver avec des pertes de droits, ou des droits dégradés, lorsqu'il veut se remettre à visionner des services de l'opérateur préférentiel.

Il existe donc un problème non résolu de façon satisfaisante à ce jour d'assurer un fonctionnement correct du système lorsque le décodeur de l'abonné n'est pas utilisé pour visionner des chaînes payantes d'un opérateur préférentiel pendant un temps relativement long.

Ce problème est résolu par la méthode décrite dans la partie caractérisante de la revendication 1.

La façon dont la méthode fonctionne est la suivante. Au moment où les conditions normales de fonctionnement du décodeur sont réunies pour un passage en mode de veille, destiné par exemple à économiser l'énergie électrique, ce passage est différé pendant une phase transitoire de fonctionnement, dont la durée est choisie de manière à assurer la réception des EMM pendant au moins un cycle de diffusion des EMM relatifs à l'un des contrôles d'accès utilisés par l'un des opérateurs. Durant cette phase transitoire, le décodeur IRD est automatiquement commuté sur l'opérateur préférentiel.

Dans une forme particulière de réalisation de l'invention, le système de contrôle d'accès installé chez l'opérateur calcule la durée de la phase transitoire notamment, mais non exclusivement, en fonction de la bande passante accordée aux EMM et au nombre d'EMM à envoyer dans un cycle, et envoie le résultat du calcul à l'ensemble des décodeurs du système distribué. En particulier, le nombre d'EMM à envoyer peut dépendre fortement de certaines conditions liées au jour calendaire. Ainsi, à la fin d'un mois donné, de nombreux abonnés sont susceptibles de renouveler leur abonnement à tel ou tel service. Dans ces conditions dites de saisonnalité, on sait que le nombre moyen d'EMM à diffuser sera plus important en fin de mois que par exemple en milieu de mois. Le système de contrôle d'accès peut alors prévoir une marge de sécurité supplémentaire liée à cette saisonnalité.

Dans cette forme, le head-end de l'installation envoie, par exemple cinq jours avant la fin d'un mois, aux décodeurs installés chez les abonnés la séquence suivante de messages:
1) message de haute priorité envoyé, pendant cinq minutes, aux décodeurs dont le numéro est compris entre m et n, où n moins m vaut par exemple mille: faire passer la durée de la phase transitoire de fonctionnement de une heure à trois heures.
2) message de haute priorité envoyé aux décodeurs dont le numéro est compris entre n et p, où p moins n vaut également mille: faire passer la durée de la phase transitoire de fonctionnement de une heure à trois heures,et ainsi de suite jusqu'à ce que l'ensemble du parc de décodeurs ait été l'objet d'un tel message de haute priorité.

Cette manière de procéder permet de ne pas perturber le fonctionnement du système par un message de haute priorité diffusé à tous les décodeurs sans exception. Un tel message dit universel peut générer des problèmes dans la mesure où son caractère hautement prioritaire lui fait prendre le pas sur d'autres messages de routine, qui ne bénéficient pas de la même priorité mais dont l'exécution est cependant importante; la manière de procéder prédécrite permet de circonscrire de tels problèmes à une certaine tranche de numéros de décodeurs, ce qui permet d'optimiser la gestion et la résolution ultérieure de tels problèmes.

Lorsque le pic de fin de mois est passé, le head-end de l'installation envoie, par exemple trois jours après le début du mois suivant, un message selon les mêmes modalités, faisant revenir la durée de la phase transitoire de fonctionnement à une valeur plus petite telle que une heure. L'opérateur peut aussi décider de faire bénéficier ce message de retour à la normale d'une priorité plus faible.

L'invention concerne également un décodeur tel que défini dans la revendication 8 fonctionnant suivant la méthode prédécrite. Dans toute la suite, l'état du décodeur correspondant à la phase transitoire de fonctionnement sera appelé état transitoire.

Dans l'état transitoire, le décodeur n'effectue pas de décodage de flux vidéo, et n'envoie donc pas de signal vers le téléviseur. Il se contente d'effectuer les opérations de réception de messages associés, tels qu'ECM et EMM. En l'absence de réception d'un programme télévisuel, les messages ECM servent en particulier à maintenir l'heure dans le sous-système d'accès conditionnel, c'est-à-dire la carte à puce insérée dans le décodeur.

L'état de veille est normalement l'état dans lequel passe le décodeur à la fin de la phase transitoire de fonctionnement selon l'invention.

Lorsqu'il a été éteint manuellement par l'abonné, sans que l'appareil soit débranché, il s'agit de l'état couramment désigné par "Off" par exemple sur l'interrupteur de mise en marche sur le décodeur ou sur sa télécommande. Dans l'état de veille, le décodeur n'assure ni affichage, ni décodage, ni réception de messages associés.

Dans le cas où on veut éviter que le fait de débrancher la prise de courant du décodeur n'affecte négativement l'efficacité de la méthode selon l'invention, il est nécessaire de prévoir une alimentation autonome en énergie du décodeur, alimentation qui doit être d'une durée suffisante pour assurer le fonctionnement voulu pendant la phase transitoire. Une telle alimentation peut, de manière connue en soi, consister en une pile ou une batterie.

Le passage en phase transitoire de fonctionnement peut, dans une première forme de réalisation de l'invention, s'effectuer au moyen d'un relais électromécanique classique soumis à temporisation, ce relais commandant, de manière connue en soi, le passage à l'état transitoire.

Dans une autre forme de réalisation, le passage et le maintien à l'état transitoire est assuré par des fonctions logicielles uniquement, l'électronique présente dans les décodeurs prenant en charge le passage à l'état transitoire, la durée de cet état transitoire, et enfin le passage du décodeur en état de veille, lorsque la durée prescrite pour l'état transitoire est atteinte.

Cette forme de réalisation concerne particulièrement les décodeurs munis d'un équipement spécial appelé couramment "timer", qui commande de manière programmable la mise en activité du décodeur. Dans ce genre de décodeurs, l'invention fait de préférence appel aux fonctionnalités de ce timer.

Selon une variante de l'invention, lorsque l'abonné avait précédemment sélectionné l'opérateur préférentiel pour une durée au moins égale à la période, la phase transitoire est simplement supprimée, le décodeur ayant reçu toutes informations nécessaires pour être à jour.

Dans une forme intermédiaire, si la durée de fonctionnement normal sur l'opérateur préférentiel était inférieur à la période, la durée de la phase transitoire sera ajustée pour que la somme de la durée d'utilisation et la phase transitoire corresponde à la période.

Cette invention ne se limite pas uniquement à la réception des messages EMM d'un opérateur préférentiel mais peut être appliquée à plusieurs opérateurs nécessitant la mise à jour des droits s'y référant. Durant la phase transitoire, le décodeur va balayer les canaux respectifs des opérateurs afin de mettre à jour les données de chacun avant de commuter à l'état de veille.

Selon une autre forme de réalisation de l'invention, le décodeur est lui-même capable de déterminer la période. Cette période étant définie comme le temps séparant la répétition des messages EMM, il le décodeur, lors de l'entrée en mode transitoire va mémoriser le premier message EMM et attendra pour décréter la fin de la période que le même message EMM soit renvoyé. La durée transitoire sera juste la durée nécessaire et suffisante pour la mise à jour des droits. Dans le cas où la durée de répétition du message dépasserait la période maximale prédéfinie, le décodeur passe dans l'état de veille à l'issue de cette période.

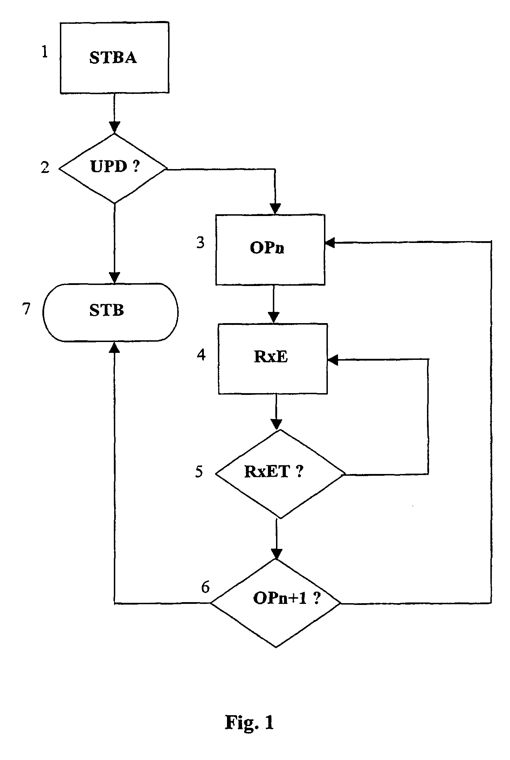

L'invention sera mieux comprise grâce à la description détaillée qui va suivre et qui se réfère à la figure unique qui est donnée à titre d'exemple nullement limitatif, dans laquelle il est décrit un organigramme de fonctionnement de l'invention.

Cette figure illustre les différentes étapes du processus de mise en veille du décodeur qui se rapporte à l'invention ainsi que leur succession dans différents cas possibles, soit :
Cas 1 : aucune réception des droits n'est nécessaire.
   Lorsque la mise en veille est activée par l'entrée dans le bloc STBA, et le test UPD de la nécessité d'une mise à jour est effectué sur la base du fonctionnement préalable du décodeur. En effet, si le décodeur se trouvait déjà sur un canal délivrant des informations de gestion, le décodeur pourra passer directement à l'état de veille STB.
Cas 2 : une réception des droits est nécessaire.
   Lorsque la mise en veille est activée (STBA), et que le test UPD a montré que le décodeur ne se trouvait pas sur un canal délivrant des informations de gestion, alors il commute la réception sur l'opérateur préférentiel Opn; il reçoit et traite les messages d'administration et de mise à jour EMM (RxE) jusqu'à ce que le cycle complet soit terminé selon les critères définis précédemment, test représenté par le losange RxET.
   Une fois la fin du cycle établi, le décodeur effectue un test de la nécessité d'une mise à jour pour un autre opérateur (OPn+1), et si ce test est négatif, il passe à l'état de veille (STB).
Cas 3 : une mise à jour est nécessaire pour un autre opérateur.
   Si le test Opn+1 est positif, le décodeur commute la réception sur le prochain opérateur préférentiel (n+1), et recommence le processus de réception et de traitement des messages d'administration et de mise à jour EMM jusqu'à ce que le cycle complet pour cet opérateur soit terminé.
   Lorsque tous les opérateurs préférentiels ont été traités, le décodeur passe alors à l'état de veille.

Selon une variante de l'invention, à chaque entrée dans le processus de mise en veille, seulement un opérateur préférentiel sera traité avant de passer dans l'état de veille. Le traitement de tous les opérateurs préférentiels se faisant alors en changeant d'opérateur lors de l'entrée dans le processus de mise en veille.

## Revendications

1. Méthode de mise à jour des droits de réception dans un système de réception multi-opérateurs par des messages d'administration (EMM) et de mise à jour, au moins un opérateur diffusant un flux vidéo avec des messages d'administration (EMM) et au moins un opérateur diffusant un flux vidéo sans messages d'administration (EMM), entre un système de gestion d'abonné et un ou plusieurs décodeurs de télévision à péage, lesdits messages (EMM) mettant à jour des droits et paramètres stockés dans un module de sécurité associé au décodeur, le fonctionnement dudit décodeur étant tributaire de la réception de messages d'administration (EMM) et de mise à jour de la part d'au moins un opérateur préférentiel, ce décodeur devant dans certaines conditions passer en état de veille, **caractérisée en ce qu'**elle comprend les étapes suivantes lors de l'activation du mode veille:
- commuter la réception sur le ou les opérateurs préférentiels diffusant un flux vidéo avec des messages d'administration (EMM),
- recevoir et traiter les messages d'administration (EMM) et de mise à jour,
- déterminer la fin d'un cycle complet de réception de ces messages,
- commuter à l'état de veille.

2. Méthode de mise à jour selon la revendication 1, lorsque le décodeur est connecté à plus d'un opérateur préférentiel, **caractérisée qu'**elle consiste à répéter les opérations de commutation, de réception, de traitement et de détermination de fin de cycle, pour chaque opérateur.

3. Méthode selon la revendication 1, **caractérisée en ce que** la détermination de la fin d'un cycle complet est définie selon une durée prédéfinie.

4. Méthode selon la revendication 3, **caractérisée en ce que** cette durée est déterminée par le système de gestion d'abonné et transmise au décodeur.

5. Méthode selon la revendication 1, **caractérisée en ce que** la détermination de la fin d'un cycle complet est définie selon les étapes suivantes:
- réception d'un premier message de gestion des droits,
- réception des messages jusqu'à la répétition du premier message.

6. Méthode selon la revendication 5, **caractérisée en ce que** la commutation à l'état de veille est activée dès lors que la durée d'attente de répétition du premier message dépasse une période prédéfinie.

7. Méthode selon la revendication 1, **caractérisée en ce que** la détermination de la fin d'un cycle complet est définie selon la durée pendant laquelle le décodeur a été connecté à l'opérateur préférentiel préalablement à l'activation du mode veille.

8. Décodeur de télévision à péage comprenant un dispositif de mise en veille pouvant être actionné par l'utilisateur, une unité de réception capable de recevoir une pluralité de canaux, dont une partie au moins contient un flux video avec des messages d'administration (EMM) et de mise à jour des droits de réception destinés à un module de sécurité associé à l'unité de réception, **caractérisé en ce qu'**il comprend des moyens qui, lors de l'activation de mise en veille, commute l'unité de réception sur un ou des canaux contenant un flux video avec des messages d'administration (EMM) et de mise à jour, des moyens pour recevoir et traiter les messages d'administration et de mise à jour, des moyens pour déterminer la fin d'un cycle complet de réception de ces messages et des moyens pour commuter à l'état de veille.

9. Décodeur de télévision à péage selon la revendication 8, **caractérisé en ce que** les moyens pour déterminer la fin d'un cycle complet de réception comprennent une horloge.

10. Décodeur de télévision à péage selon la revendication 8, **caractérisé en ce que** les moyens pour déterminer la fin d'un cycle complet comprennent des moyens de mémorisation d'un premier message de mise à jour, et des moyens pour détecter la répétition de ce premier message de fin de mise à jour.

## Patentansprüche

1. Verfahren der Aktualisierung der Empfangsrechte in einem Mehrbetreiber-Empfangssystem durch Verwaltungs- (EMM) und Aktualisierungsnachrichten zwischen einem Abonnentenverwaltungssystem und einem oder mehreren Gebührenfernsehdecodern, wobei zumindest ein Betreiber einen Videodatenstrom mit Verwaltungsnachrichten (EMM) und zumindest ein Betreiber einen Videodatenstrom ohne Verwaltungsnachrichten (EMM) aussendet und die Nachrichten (EMM) die in einem an den Decoder angeschlossenen Sicherheitsmodul gespeicherten Rechte und Parameter aktualisieren, wobei das Funktionieren dieses Decoders vom Empfang von Verwaltungs- (EMM) und Aktualisierungsnachrichten zumindest eines bevorzugten Betreibers abhängt und dieser Decoder unter bestimmten Bedingungen in den Bereitschaftszustand übergehen soll, **dadurch gekennzeichnet, dass** es die folgenden Schritte während der Aktivierung des Bereitschaftszustands umfasst:
- Umschaltung des Empfangs auf den oder die bevorzugten Betreiber, die einen Videodatenstrom mit Verwaltungsnachrichten (EMM) aussenden,
- Empfang und Verarbeitung der Verwaltungs- (EMM) und Aktualisierungsnachrichten,
- Bestimmung des Endes eines vollen Empfangszyklus dieser Nachrichten,
- Umschaltung in den Bereitschaftszustand.

2. Verfahren der Aktualisierung nach Anspruch 1, wenn der Decoder mit mehr als einem bevorzugten Betreiber verbunden ist, **dadurch gekennzeichnet, dass** es darin besteht, die Schritte der Umschaltung, des Empfangs, der Verarbeitung und der Bestimmung des Endes eines Zyklus für jeden Betreiber zu wiederholen.

3. Verfahren nach Anspruch 1, **dadurch gekennzeichnet, dass** die Bestimmung des Endes eines vollen Zyklus in Übereinstimmung mit einer im Voraus definierten Zeitdauer definiert ist.

4. Verfahren nach Anspruch 3, **dadurch gekennzeichnet, dass** diese Zeitdauer durch das Abonnentenverwaltungssystem bestimmt und zum Decoder übermittelt wird.

5. Verfahren nach Anspruch 1, **dadurch gekennzeichnet, dass** die Bestimmung des Endes eines vollen Zyklus durch die folgenden Schritte definiert wird:
- Empfang einer ersten Rechteverwaltungsnachricht,
- Empfang der Nachrichten bis zur Wiederholung der ersten Nachricht.

6. Verfahren nach Anspruch 5, **dadurch gekennzeichnet, dass** die Umschaltung in den Bereitschaftszustand aktiviert wird, sobald die Zeit des Wartens auf die Wiederholung der ersten Nachricht eine vordefinierte Periode überschreitet.

7. Verfahren nach Anspruch 1, **dadurch gekennzeichnet, dass** die Bestimmung des Endes eines vollen Zyklus gemäss der Zeitdauer bestimmt wird, während der der Decoder vor Aktivierung des Bereitschaftszustands mit dem bevorzugten Betreiber verbunden war.

8. Gebührenfernsehdecoder mit einer Vorrichtung für die Umschaltung in den Bereitschaftszustand, die durch den Benutzer betätigt werden kann, mit einer Empfangseinheit, mit der eine Mehrzahl von Kanälen empfangen werden kann, von denen zumindest ein Teil einen Videodatenstrom mit Verwaltungs- (EMM) und Aktualisierungsnachrichten für die Empfangsrechte enthält, die für einen dem Decoder beigeordneten Sicherheitsmodul bestimmt sind, **dadurch gekennzeichnet, dass** er Mittel umfasst, die bei Aktivierung der Umschaltung in den Bereitschaftszustand die Empfangseinheit auf einen der Kanäle umschalten, der einen Videodatenstrom mit Verwaltungs- (EMM) und Aktualisierungsnachrichten enthält, ferner Mittel, um die Verwaltungs- und Aktualisierungsnachrichten zu empfangen und zu verarbeiten, Mittel, um das Ende eines vollen Empfangszyklus dieser Nachrichten zu bestimmen, sowie Mittel, um zum Bereitschaftszustand umzuschalten.

9. Gebührenfernsehdecoder nach Anspruch 8, **dadurch gekennzeichnet, dass** diese Mittel zur Bestimmung des Endes eines vollen Empfangszyklus eine Uhr umfassen.

10. Gebührenfernsehdecoder nach Anspruch 8, **dadurch gekennzeichnet, dass** die Mittel zur Bestimmung des Endes eines vollen Zyklus Mittel für eine Speicherung einer ersten Aktualisierungsnachricht sowie Mittel zur Erkennung der Wiederholung dieser ersten Nachricht der beendeten Aktualisierung umfassen.

## Claims

1. A method of updating the reception rights in a multi-operator reception system by administration and updating messages (EMM), at least one operator broadcasting a video stream with administration messages (EMM) and at least one operator broadcasting a video stream without administration messages (EMM), between a subscriber management system and one or several pay television decoders, said messages (EMM) are aimed to update rights and parameters in a security module associated with the decoder, the functioning of the decoder being dependant on the reception of administration (EMM) and updating messages from at least one preferential operator, this decoder having to pass into stand-by state under certain conditions, **characterized in that** it comprises the following steps when activating the stand-by mode:
- switching of the reception to the preferential operator or operators broadcasting a video stream with administration messages (EMM),
- receiving and processing of the administration and updating messages (EMM),
- determining of the end of a complete cycle of reception of these messages,
- switching to the stand-by state.

2. A method of updating according to Claim 1, when the decoder is connected to more than one preferential operator, **characterized in that** it consists in repeating the operations of switching, receiving, processing, and determining of the end of the cycle for each operator.

3. A method according to Claim 1, **characterized in that** the determination of the end of a complete cycle is defined according to pre-defined duration.

4. A method according to Claim 3, **characterized in that** this duration is determined by the subscriber management system and transmitted to the decoder.

5. A method according to Claim 1, **characterized in that** the determination of the end of a complete cycle is defined according to the following stages:
- reception of a first message of management of rights,
- reception of messages until the repetition of the first message.

6. A method according to Claim 5, **characterized in that** the switching to the stand-by state is activated when the duration of waiting for the repetition of the first message exceeds a pre-defined period.

7. A method according to Claim 1, **characterized in that** the determination of the end of a complete cycle is defined according to the duration during which the decoder has been connected to the preferential operator previously to the activation of the stand-by mode.

8. A decoder of pay television comprising a stand-by device that can be activated by the user, a reception unit capable of receiving a plurality of channels, of which at least one part contains a video stream with administration and reception rights updating messages (EMM), which are intended to a security module associated with the reception unit, **characterized in that** it comprises means that, when activating the stand-by, switches the reception unit on one of the channels that contains the administration and updating messages (EMM), means for receiving and processing the administration and updating messages, means for determining the end of a complete cycle of reception of these messages, and means for the switching into the stand-by state.

9. A decoder of pay television according to Claim 8, **characterized in that** the means for determining the end of a complete cycle of reception comprise a clock.

10. A decoder of pay television according to Claim 8, **characterized in that** the means for determining the end of a complete cycle comprise means for memorizing a first updating message, and means for detecting the repetition of this first message of the end of updating.
